# EUROPÄISCHE PATENTSCHRIFT

(11) **EP 1 264 124 B1**
(45) Veröffentlichungstag und Bekanntmachung des Hinweises auf die Patenterteilung: **20.07.2005**
(21) Anmeldenummer: 01909830.0
(22) Anmeldetag: 10.03.2001
(51) Int. Cl.: F16H 37/02

(54) **GETRIEBEEINHEIT**
TRANSMISSION ASSEMBLY
ENSEMBLE TRANSMISSION

(30) Priorität: 17.03.2000 DE 10013179
(43) Veröffentlichungstag der Anmeldung: 11.12.2002
(73) Patentinhaber: ZF FRIEDRICHSHAFEN Aktiengesellschaft, 88038 Friedrichshafen (DE)
(72) Erfinder: HOHER, Markus, 88048 Friedrichshafen (DE)
(86) Internationale Anmeldenummer: PCT/EP2001/002691
(87) Internationale Veröffentlichungsnummer: WO 2001/069106

(56) Entgegenhaltungen:
- EP-A- 0 199 533
- EP-A- 0 350 200
- DE-A- 2 944 928

## Beschreibung

Die vorliegende Erfindung betrifft eine Getriebeeinheit mit einem Gehäuse, mit einer Antriebswelle, mit einer Vorgelegewelle, und mit einer Anordnung zur Veränderung des Übersetzungsverhältnisses zwischen der Antriebswelle und der Vorgelegewelle, die ein stufenloses Getriebe aufweist, sowie ein diesem nachgeordnetes mechanisches Getriebe, mit Schaltelementen in Form von Kupplungen und Bremsen und mit einem Planetenradsatz zur Schaltung des Rückwärtsganges und eines oder mehrerer Vorwärtsgänge.

EP-A-O 199 533 zeigt eine gattungsgemäße Getriebeeinheit.

Stufenlose Getriebe (CVT - Continuously Variable Transmission) sind in Form von Umschlingungsgetrieben oder in Form von Reibradgetrieben vielfältig bekannt. So beschreibt die DE 198 44 374.9 der Anmelderin ein Umschlingungsgetriebe, das ein erstes Kegelscheibenpaar auf einer Antriebswelle und ein zweites Kegelscheibenpaar auf einer Abtriebswelle aufweist, wobei jedes Kegelscheibenpaar aus einer in axialer Richtung feststehenden ersten Scheibe und aus einer in axialer Richtung verschiebbaren zweiten Kegelscheibe (Primärscheiben bzw. Sekundärscheiben) besteht. Zwischen den Kegelscheibenpaaren läuft ein Umschlingungsorgan, z. B. ein Schubgliederband. Die Verstellung der Primärscheibe bzw. Sekundärscheibe erfolgt durch ein Druckmedium mit Hilfe eines elektronischen Steuergerätes, welches über elektromagnetische Stellglieder und hydraulische Ventile das Druckniveau der Stellräume von Primärscheibe und Sekundärscheibe ansteuert.

Ein Reibradgetriebe ist beispielsweise in der WO 99/05433 der Anmelderin beschrieben. Es weist koaxial zu einer gemeinsamen Welle angeordnete Eingangs- und Ausgangsscheiben auf, die paarweise zueinander angeordnet sind und deren Innenflächen toroidförmig ausgestaltet sind, sowie zwischen den Paaren von Eingangs- und Ausgangsscheiben angeordnete Reibräder. Diese Reibräder stehen sowohl mit den Eingangsscheiben als auch mit den Ausgangsscheiben in Reibkontakt und übertragen das ihnen von der Eingangsscheibe übertragene Drehmoment auf die Ausgangsscheibe durch reibschlüssigen Kontakt, wobei die Drehzahl der Reibräder um so höher liegt, je größer der Abstand zwischen ihrer Berührungsstelle mit der Eingangsscheibe und der Drehachse ist. Die Drehzahl der Ausgangsscheibe hingegen ist um so größer, je näher die Berührungsstelle zwischen Reibrad und Ausgangsscheibe an der Drehachse liegt. Durch Verschwenkung der Reibräder kann demzufolge die Drehzahl der Ausgangsscheibe stufenlos und beliebig eingestellt werden. Zu diesem Zweck sind die Drehachsen der Reibräder an einem Träger gelagert, der über eine Verschwenkeinrichtung ansteuerbar ist. Die beiden Eingangsscheiben der beiden Getriebeeinheiten sind hierbei drehfest mit einer Drehmomentwelle verbunden, während die beiden Ausgangsscheiben der beiden Getriebeeinheiten, die spiegelsymmetrisch zueinander und nebeneinander im Getriebe angeordnet sind, auf einer gemeinsamen Buchse angeordnet sind, welche drehbar auf der Drehmomentwelle gelagert ist. Die Drehmomentwelle wird von einer Eingangswelle durchsetzt, die mit einem Anfahrelement eines Kraftfahrzeuges, beispielsweise einem Drehmomentwandler oder einer naßlaufenden Anfahrkupplung der Antriebsmaschine des Fahrzeugs verbunden ist.

Aufgabe der vorliegenden Erfindung ist es, den Bauraumbedarf für diese Getriebeeinheit zu verringern und die Ölzuführungen zu vereinfachen.

Ausgehend von einer Getriebeeinheit der eingangs näher genannten Art erfolgt die Lösung dieser Aufgabe mit den in den Ansprüchen 1, 2 und 3 angegebenen Merkmalen.

Bei dem in Anspruch 1 definierten Ausführungsbeispiel der erfindungsgemäßen Getriebeeinheit sind die Bauteile des mechanischen Getriebes derart angeordnet, dass dem stufenlosen Getriebe eine Bremse für den Rückwärtsgang mit integrierter Ölzuführung nachgeordnet ist, dass dieser Bremse eine Kupplung für den zweiten Bereich nachgeordnet ist, dass dieser Kupplung ein Planetenradsatz nachgeordnet ist, dass dem Planetenradsatz eine Kupplung für den ersten Bereich mit integrierter Ölzuführung nachgeordnet ist und dass dieser Kupplung ein Stirntrieb nachgeordnet ist.

Diese besondere Anordnung der einzelnen Bauteile ermöglicht nicht nur eine kompakte Bauweise mit verringertem Raumbedarf, sondern auch eine Vereinfachung der Ölzuführungen, die einmal in eine Bremse und einmal in eine Kupplung integriert ist. Außerdem ist ein modularer Aufbau der Getriebeeinheit möglich, d. h. dass bei der Endmontage nur zwei vormontierte Baugruppen montiert werden müssen, wodurch die Endmontage beschleunigt wird.

Bei dem im Anspruch 2 definierten Ausführungsbeispiel der erfindungsgemäßen Getriebeeinheit wird die Anordnung der Bauteile des mechanischen Getriebes derart gewählt, dass die Kupplung für den ersten Bereich mit dem Stirntrieb vertauscht wird, wodurch eine kürzere Vorgelegewelle einsetzbar ist und der Stirntrieb näher am Motor des Kraftfahrzeuges angeordnet werden kann. Dadurch wird der Bauraum im hinteren, d. h. dem abtriebsseitigen Teil der Getriebeeinheit weiter verringert.

Bei dem im Anspruch 3 definierten Ausführungsbeispiel der erfindungsgemäßen Getriebeeinheit wird die Anordnung der Bauteile des mechanischen Getriebes derart gewählt, dass die Kupplung für den ersten Bereich mit dem Stirntrieb und dem Planetenradsatz in der Anordnungsreihenfolge vertauscht wird, wodurch eine alternative Anbindung des Planetenradsatzes ermöglicht wird und der Abtrieb über dessen Steg erfolgt; auch hier kann die Vorgelegewelle erheblich kürzer ausgeführt sein, wodurch der Bauraum im hinteren, d. h. dem abtriebsseitigen Teil der Getriebeeinheit verringert wird.

Im folgenden wird die Erfindung anhand der Zeichnung näher erläutert, in der diese vorteilhaften Ausführungsbeispiele dargestellt sind.
Es zeigen:
- Fig. 1: schematisch einen Axialschnitt durch ein erstes Ausführungsbeispiel des Aufbaus des mechanischen Getriebes,
- Fig. 2: das Getriebeschema dieses ersten Ausführungsbeispiels,
- Fig. 3: das Getriebeschema eines zweiten Ausführungsbeispiels und
- Fig. 4: das Getriebeschema des dritten Ausführungsbeispiels gemäß der Erfindung.

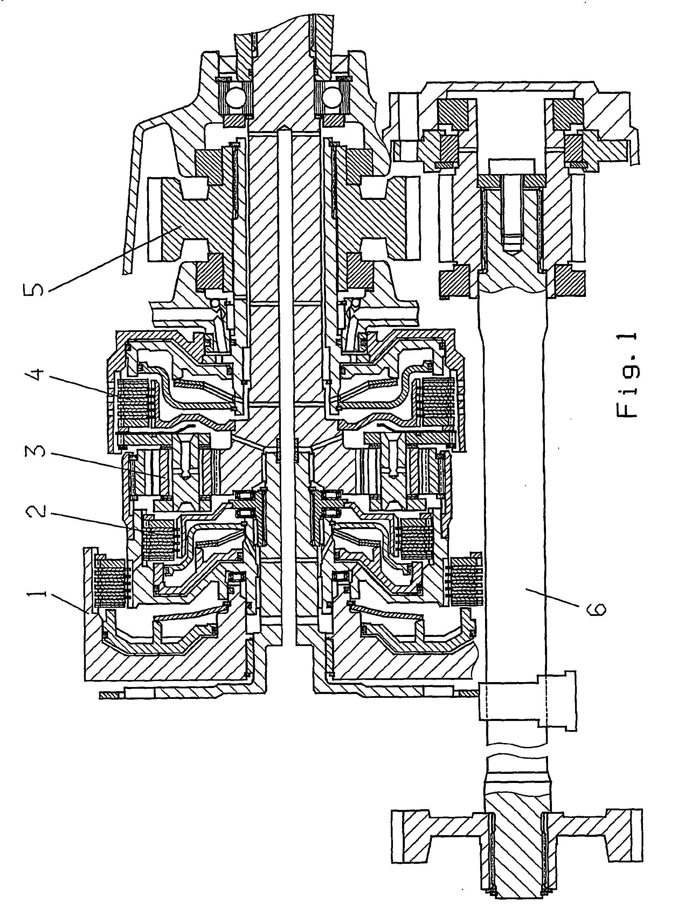

Bei dem in Fig. 1 dargestellten Längsschnitt durch den hinteren, d. h. abtriebsseitigen Bereich einer erfindungsgemäßen Getriebeeinheit, die dem (nicht dargestellten) stufenlosen Getriebe, d. h. entweder einem Umschlingungsgetriebe oder einem Reibradgetriebe nachgeordnet ist, ist die Anordnung der einzelnen Bauteile wie folgt gewählt:

Der Bremse 1 für den Rückwärtsgang mit integrierter Ölzuführung ist eine Kupplung 2 für den zweiten Bereich nachgeordnet; dieser Kupplung 2 ist ein Planetenradsatz 3 nachgeordnet; dem Planetenradsatz 3 ist eine Kupplung 4 für den ersten Bereich ebenfalls mit integrierter Ölzuführung nachgeordnet; der Kupplung 4 ist ein Stirntrieb 5 nachgeordnet, der mit der Vorgelegewelle 6 in Antriebsverbindung steht.

Diese Anordnung der einzelnen Bauteile des mechanischen Getriebes ermöglicht nicht nur eine kompakte Bauweise mit vereinfachten Ölzuführungen, sondern auch einen modularen Aufbau, sodass bei der Endmontage nur zwei vormontierte Baugruppen zur Beschleunigung der Endmontage zusammenzufügen sind.

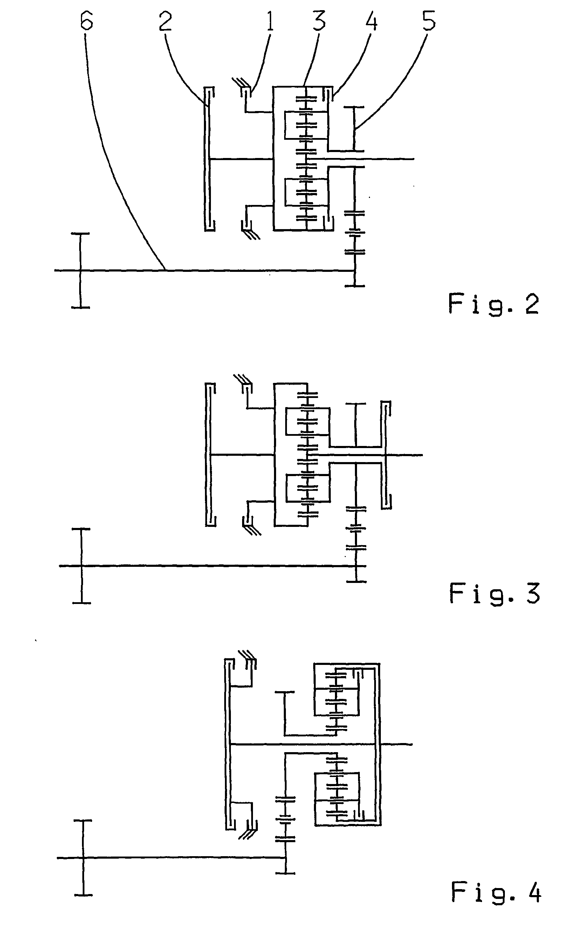

In Fig. 2 ist das zugehörige Getriebeschema für den in Fig. 1 erläuterten Aufbau des mechanischen Getriebes dargestellt.

Bei einem weiteren Ausführungsbeispiel der Anordnung der Bauteile des mechanischen Getriebes, wie aus dem Getriebeschema der Fig. 3 zu entnehmen ist, erfolgt die Anordnung der Bauteile dergestalt, dass die Kupplung 4 für den ersten Bereich mit dem Stirntrieb 5 vertauscht wird, wodurch eine kürzere Vorgelegewelle 6 verwendet werden kann und der Stirntrieb 5 näher an das stufenlose Getriebe und damit an den Motor des Kraftfahrzeuges rückt. Dieses bedeutet einen verringerten Bauraum im hinteren Teil der Getriebeeinheit, d. h. im mechanischen Getriebe.

Bei einem weiteren erfindungsgemäßen Ausführungsbeispiel, das im Getriebeschema in Fig. 4 dargestellt ist, erfolgt die Anordnung der Bauteile im mechanischen Getriebe dergestalt, dass die Kupplung 4 für den ersten Bereich mit dem Stirntrieb 5 und dem Planetenradsatz 6 vertauscht wird, wodurch eine alternative Anbindung des Planetenradsatzes 3 ermöglicht wird, indem der Abtrieb über den Steg erfolgt. Die Vorgelegewelle 6 kann dadurch noch weiter verkürzt werden und damit der Bauraum im hinteren Teil der Getriebeeinheit, d. h. im mechanischen Getriebe noch mehr verkleinert werden.

### Bezugszeichen

- 1: Bremse
- 2: Kupplung
- 3: Planetenradsatz
- 4: Kupplung
- 5: Stirntrieb
- 6: Vorgelegewelle

## Patentansprüche

1. Getriebeeinheit insbesondere für Kraftfahrzeuge, mit einem Gehäuse, mit einer Antriebswelle, mit einer Vorgelegewelle und mit einer Anordnung zur Veränderung des Übersetzungsverhältnisses zwischen der Antriebswelle und der Vorgelegewelle (6), die ein stufenloses Getriebe aufweist, sowie ein diesem nachgeordnetes mechanisches Getriebe mit Schaltelementen in Form von Kupplungen und Bremse und einem Planetenradsatz zur Schaltung eines Rückwärtsfahrtbereichs und mindestens zwei Vorwärtsfahrtbereichen, **dadurch gekennzeichnet, dass** die Bauteile des mechanischen Getriebes wie folgt räumlich angeordnet sind:
- dem stufenlosen Getriebe ist eine Bremse (1) für den Rückwärtsfahrtbereich mit integrierter Ölzuführung nachgeordnet;
- der Bremse (1) ist eine Kupplung (2) für den zweiten Vorwärtsfahrtbereich nachgeordnet;
- der Kupplung (2) ist ein Planetenradsatz (3) nachgeordnet;
- dem Planetenradsatz (3) ist eine Kupplung (4) für den ersten Vorwärtsfahrtbereich mit integrierter Ölzuführung nachgeordnet und
- der Kupplung (4) ist ein Stirntrieb (5) nachgeordnet.

2. Getriebeeinheit insbesondere für Kraftfahrzeuge, mit einem Gehäuse, mit einer Antriebswelle, mit einer Vorgelegewelle und mit einer Anordnung zur Veränderung des Übersetzungsverhältnisses zwischen der Antriebswelle und der Vorgelegewelle (6), die ein stufenloses Getriebe aufweist, sowie ein diesem nachgeordnetes mechanisches Getriebe mit Schaltelementen in Form von Kupplungen und Bremsen und ei-nem Planetenradsatz zur Schaltung eines Rückwärtsfahrtbereiches und mindestens zwei Vorwärtsfahrtbereichen, **dadurch gekennzeichnet, dass** die Bauteile des mechanischen Getriebes wie folg räumlich angeordnet sind:
- dem stufenlosen Getriebe ist eine Bremse (1) für den Rückwärtsfahrtbereich mit integrierter Ölzuführung nachgeordnet;
- der Bremse (1) ist eine Kupplung (2) für den zweiten Vorwärtsfahrtbereich nachgeordnet;
- der Kupplung (2) ist ein Planetenradsatz (3) nachgeordnet;
- dem Planetenradsatz (3) ist ein Stirntrieb (5) nachgeordnet und
- dem Stirntrieb (5) ist eine Kupplung (4) für den ersten Vorwärtsfahrt-Bereich mit integrierter Ölzuführung nachgeordnet.

3. Getriebeeinheit insbesondere für Kraftfahrzeuge, mit einem Gehäuse, mit einer Antriebswelle, mit einer Vorgelegewelle und mit einer Anordnung zur Veränderung des Übersetzungsverhältnisses zwischen der Antriebswelle und der Vorgelegewelle (6), die ein stufenloses Getriebe aufweist, sowie ein diesem nachgeordnetes mechanisches Getriebe mit Schaltelementen in Form von Kupplungen und Bremsen und einem Planetenradsatz zur Schaltung eines Rückwärtsfahrtbereiches und mindestens zwei Vorwärtsfahrtbereichen, **dadurch gekennzeichnet, dass** die Bauteile des mechanischen Getriebes wie folgt angeordnet sind:
- dem stufenlosen Getriebe ist eine Bremse (1) für den Rückwärtsfahrtbereich mit integrierter Ölzuführung nachgeordnet;
- der Bremse (1) ist eine Kupplung (2) für den zweiten Vorwärtsfahrtbereich nachgeordnet;
- der Kupplung (2) ist ein Stirntrieb (5) nachgeordnet; dem Stirntrieb (5) ist ein Planetenradsatz (3) nachgeordnet und
- dem Planetenradsatz (3) ist eine Kupplung (4) für den ersten Vorwärtsfahrt-Bereich mit integrierter Ölzuführung nachgeordnet.

## Claims

1. Gear unit in particular for motor vehicles, having a housing, having an input shaft, having a layshaft and having an arrangement for varying the transmission ratio between the input shaft and the layshaft (6), which arrangement comprises a continuously variable transmission as well as a mechanical transmission downstream thereof having shift elements in the form of clutches and brakes and a planet gear set for selecting a reverse driving range and at least two forward driving ranges, **characterized in that** the components of the mechanical transmission are spatially arranged as follows:
- disposed downstream of the continuously variable transmission is a brake (1) for the reverse driving range with an integrated oil feed;
- disposed downstream of the brake (1) is a clutch (2) for the second forward driving range;
- disposed downstream of the clutch (2) is a planet gear set (3);
- disposed downstream of the planet gear set (3) is a clutch (4) for the first forward driving range with an integrated oil feed and
- disposed downstream of the clutch (4) is a spur gear set (5).

2. Gear unit in particular for motor vehicles, having a housing, having an input shaft, having a layshaft and having an arrangement for varying the transmission ratio between the input shaft and the layshaft (6), which arrangement comprises a continuously variable transmission as well as a mechanical transmission downstream thereof having shift elements in the form of clutches and brakes and a planet gear set for selecting a reverse driving range and at least two forward driving ranges, **characterized in that** the components of the mechanical transmission are spatially arranged as follows:
- disposed downstream of the continuously variable transmission is a brake (1) for the reverse driving range with an integrated oil feed;
- disposed downstream of the brake (1) is a clutch (2) for the second forward driving range;
- disposed downstream of the clutch (2) is a planet gear set (3);
- disposed downstream of the planet gear set (3) is a spur gear set (5) and
- disposed downstream of the spur gear set (5) is a clutch (4) for the first forward driving range with an integrated oil feed.

3. Gear unit in particular for motor vehicles, having a housing, having an input shaft, having a layshaft and having an arrangement for varying the transmission ratio between the input shaft and the layshaft (6), which arrangement comprises a continuously variable transmission as well as a mechanical transmission downstream thereof having shift elements in the form of clutches and brakes and a planet gear set for selecting a reverse driving range and at least two forward driving ranges, **characterized in that** the components of the mechanical transmission are arranged as follows:
- disposed downstream of the continuously variable transmission is a brake (1) for the reverse driving range with an integrated oil feed;
- disposed downstream of the brake (1) is a clutch (2) for the second forward driving range;
- disposed downstream of the clutch (2) is a spur gear set (5);
- disposed downstream of the spur gear set (5) is a planet gear set (3) and
- disposed downstream of the planet gear set (3) is a clutch (4) for the first forward driving range with an integrated oil feed.

## Revendications

1. Unité de boîte de vitesses, notamment pour des véhicules automobiles, avec un carter, un arbre d'entraînement, un arbre intermédiaire et un dispositif de modification du rapport de démultiplication entre l'arbre d'entraînement et l'arbre intermédiaire (6), qui comprend une boîte de vitesses à variation en continu ainsi qu'une boîte de vitesses mécanique branchée en aval avec des éléments d'enclenchement sous la forme d'embrayages et de freins et un train d'engrenage épicycloïdal pour l'enclenchement d'un rapport marche arrière et d'au moins deux rapports de marche avant, **caractérisée en ce que** les composants de la boîte de vitesses mécanique sont disposés comme suit:
- en aval de la boîte de vitesses à variation en continu est branché un frein (1) pour le rapport de marche arrière avec une alimentation d'huile intégrée;
- en aval du frein (1) est branché un embrayage (2) pour le deuxième rapport de marche avant;
- en aval de l'embrayage (2) est branché un train d'engrenage épicycloïdal (3);
- en aval du train d'engrenage épicycloïdal (3) est branché un embrayage (4) pour le premier rapport de marche avant avec une alimentation d'huile intégrée et
- en aval de l'embrayage (4) est branché un pignon droit (5).

2. Unité de boîte de vitesses, notamment pour des véhicules automobiles, avec un carter, un arbre d'entraînement, un arbre intermédiaire et un dispositif de modification du rapport de démultiplication entre l'arbre d'entraînement et l'arbre intermédiaire (6), qui comprend une boîte de vitesses à variation en continu ainsi qu'une boîte de vitesses mécanique branchée en aval avec des éléments d'enclenchement sous la forme d'embrayages et de freins et un train d'engrenage épicycloïdal pour l'enclenchement d'un rapport marche arrière et d'au moins deux rapports de marche avant, **caractérisée en ce que** les composants de la boîte de vitesses mécanique sont disposés comme suit:
- en aval de la boîte de vitesses à variation en continu est branché un frein (1) pour le rapport de marche arrière avec une alimentation d'huile intégrée;
- en aval du frein (1) est branché un embrayage (2) pour le deuxième rapport de marche avant;
- en aval de l'embrayage (2) est branché un train d'engrenage épicycloïdal (3);
- en aval du train d'engrenage épicycloïdal (3) est branché un pignon droit (5) et
- en aval du pignon droit (5) est branché un embrayage (4) pour le premier rapport de marche avant avec une alimentation d'huile intégrée.

3. Unité de boîte de vitesses, notamment pour des véhicules automobiles, avec un carter, un arbre d'entraînement, un arbre intermédiaire et un dispositif de modification du rapport de démultiplication entre l'arbre d'entraînement et l'arbre intermédiaire (6), qui comprend une boîte de vitesses à variation en continu ainsi qu'une boîte de vitesses mécanique branchée en aval avec des éléments d'enclenchement sous la forme d'embrayages et de freins et un train d'engrenage épicycloïdal pour l'enclenchement d'un rapport marche arrière et d'au moins deux rapports de marche avant, **caractérisée en ce que** les composants de la boîte de vitesses mécanique sont disposés comme suit:
- en aval de la boîte de vitesses à variation en continu est branché un frein (1) pour le rapport de marche arrière avec une alimentation d'huile intégrée;
- en aval du frein (1) est branché un embrayage (2) pour le deuxième rapport de marche avant;
- en aval de l'embrayage (2) est branché un pignon droit (5);
- en aval du pignon droit (5) est branché un train d'engrenages épicycloïdal (3) et
- en aval du train d'engrenage épicycloïdal (3) est branché un embrayage (4) pour le premier rapport de marche avant avec une alimentation d'huile intégrée.
